(19) **Europäisches Patentamt**
**European Patent Office**
**Office européen des brevets**

(11) Publication number : **0 375 010 B1**

(12) # EUROPEAN PATENT SPECIFICATION

(45) Date of publication of patent specification :
**08.07.92 Bulletin 92/28**

(51) Int. Cl.⁵ : **C09D 7/00,** C09D 167/08,
C09K 3/30

(21) Application number : **89203097.4**

(22) Date of filing : **06.12.89**

(54) **Aerosol paint.**

(30) Priority : **07.12.88 NL 8803003**

(43) Date of publication of application :
**27.06.90 Bulletin 90/26**

(45) Publication of the grant of the patent :
**08.07.92 Bulletin 92/28**

(84) Designated Contracting States :
**BE DE FR GB IT NL**

(56) References cited :
**FR-A- 2 121 552**
**GB-A- 2 020 308**
**GB-A- 2 028 364**
**GB-A- 2 036 063**
**US-A- 4 365 028**

(73) Proprietor : **MOBACC B.V.**
**Demeterlaan 30**
**NL-9641 ML Veendam (NL)**

(72) Inventor : **Tempelman, Antonie Petrus**
**Berkenlaan 21**
**9651 BJ Meeden (NL)**

(74) Representative : **Smulders, Theodorus A.H.J.,**
**Ir. et al**
**Vereenigde Octrooibureaux Nieuwe Parklaan**
**97**
**NL-2587 BN 's-Gravenhage (NL)**

EP 0 375 010 B1

## Description

The invention relates to an aerosol paint comprising a propellant and a paint composition containing a film-forming resin, high-boiling aliphatic hydrocarbons and further additives.

The conventional aerosol paints or spray paints have a relatively low solids content, as a result of which their yield is rather low too. They contain solvents having a low flash point and aromatics, which makes them easily flammable. They are moreover harmful to man's health and the environment, owing inter alia to the fluorinated hydrocarbons frequently used as propellants, but also to the large amount of solvent which is to evaporize, which includes aromatics.

It has now been found that the abovementioned drawbacks can be overcome by composing the aerosol paint in the manner set forth hereinafter.

Accordingly, the invention is characterized in that the paint consists as to 25-40% by weight of propellant and as to 75-60% by weight of paint composition, the propellant being a non-halogenated gas or gas mixture in liquified form which acts as a co-solvent or diluent for the film-forming resin, and the paint composition having a solids content of at least 85% by weight and comprising a maximum of 15% by weight of high-boiling aliphatic hydrocarbons.

From GB-A-2 028 364 it is known to use inter alia propane, butane and isobutane as a propellant in aerosol paints. Said propellants can also be used according to the present invention as will be discussed hereinafter. However, said GB-A relates to water based aerosol paints having only a relatively low solids content.

The present aerosol paint comprises only a relatively low amount of aliphatic hydrocarbons. This is possible because the propellant used operates as a co-solvent or diluent for the film-forming resin. Because the present paint has a high solids content, a very good yield is achieved with it. Moreover the system as a whole is environmentally friendly while the total amount of flammable components, including the propellant, is only very small and is usually less than 45% by weight as compared with about 75% by weight often encountered in conventional aerosol paints. As noted above, the paint composition proper has a high solids content, amounting to at least 85% by weight. "Solids" is here understood to comprise all components which form part of the finished film of paint obtained after application and drying, i.e. all components of the paint composition proper, excluding the solvents which are to evaporize during the drying process of the film of paint applied, said solvents comprising exclusively or chiefly high-boiling aliphatic hydrocarbons.

Those so-called solid components comprise in the first place the film-forming resin. The resins to be applied are preferably liquid resins of rather low viscosity. As a film-forming resin preferably an alkyd resin is used, more precisely one having a high (at least 55%) to very high (at least 68%) fatty acid content and hence a relatively low phthalic acid content. A very suitable alkyd resin is a resin having a fatty acid content of about.73%, an isophthalic acid content of about 13% and an acid number not exceeding 12. Of course, combinations of different kinds of film-forming alkyd resins can be used.

The film-forming resin is typically used in a concentration of 35-70% by weight in relation to the paint composition (so, excluding the propellant). In general, a solution of such an amount of film-forming resin in the relatively small amount of high-boiling aliphatic hydrocarbons will still be too viscous to exhibit good spraying behaviour, but, as noted before, the propellant used according to the invention operates itself as a diluent to attain the consistency required to make the paint composition eminently sprayable.

The paint composition may further comprise various additives - to be counted among the solid components naturally depending also on the type of paint one wishes to prepare.

Accordingly, the paint composition may comprise pigments, such as titanium dioxide, carbon black, phthalocyanine metal complexes, mono-azo pigments, etc., the pigment concentration varying up to 50% by weight of the paint composition (calculated each time excluding the propellant). It is possible to avoid the use of harmful lead or cadmium pigments.

Other solid components which are often used are fillers, such as very fine precipitated barium sulfate. Fillers may be present in a concentration of up to 55% by weight.

To accelerate the drying of the film of paint, driers are added, preferably in a concentration of 1-7% by weight in relation to the paint composition. The driers are chosen for instance from the calcium, zinc, cobalt, vanadium and zirconium compounds known as driers and are usually organic salts or complexes of those metals. Excellent results can be achieved with lead-free driers.

Other additives of particular significance for aerosol paints, especially because of the way these paints are applied, namely through spraying, are rheological additives, levelling or anti-cratering agents, which prevent the film of paint from exhibiting fine pinholes, and anti-foaming agents.

As a rheological additive promoting the proper flowing of the newly sprayed film of paint, modified silicates are often used, preferably organic silicates. The concentration of this additive is preferably within the range of 0.1-2% by weight.

Yet another type of additive is the so-called levelling or anti-cratering agent, which contributes to an effective removal of the propellant from the film of paint, so that no inclusions or fine bubbles of propellant will remain present which would considerably reduce the quality of the finished film of paint. As a levelling or anti-cratering agent one may advantageously use a siloxane oil, for instance a polyalkyl siloxane oil, preferably used in a concentration of 0.01-1% by weight.

A final additive which is to be mentioned separately is an additive having a surface-active anti-foaming effect. There is much risk of foaming in aerosol paints having a high solids content, hence the importance of this additive. Especially organic silicon compounds have proved to be suitable anti-foaming agents in the present paint composition. We preferably use 0.01-1% by weight of anti-foaming agent, calculated on the paint composition, which is sufficient for effective activity.

In addition to the solid components, in essence discussed above and constituting at least 85% by weight of the paint composition, the paint composition comprises a relatively small quantity of solvents comprising exclusively or chiefly high-boiling aliphatic hydrocarbons, including cycloaliphatic hydrocarbons, which at any rate does not exceed 15% by weight of the paint composition. Suitable high-boiling aliphatic hydrocarbons are mixtures of paraffinic hydrocarbons, comprising in particular isoparaffinic hydrocarbons, such as Shellsol and Isopar, for instance Shellsol T having a boiling-range of 182-212°C at 101.3 kPA. Preferably such solvents are present in an amount of 3% by weight in relation to the paint composition, i.e. excluding the propellant.

The paint composition can be prepared according to various methods known to a person skilled in the art by milling (if necessary) and mixing the desired components in the proper ratios to produce a homogeneous paint composition, which in itself is not sufficiently thin to permit proper spraying, precisely because it contains only a relatively small amount of high-boiling aliphatic hydrocarbons. Indeed, the present invention is concerned with a paint having a high solids content. It should further be noted here that it is often preferable not to prepare the paint composition in its entirety in one step, but, for instance, to prepare two partial mixtures and to combine these to form the total paint composition. The preparation of the paint composition can be carried out in conventional milling and mixing apparatuses known in the art, optionally with heating.

As a propellant environmentally friendly gases or gas mixtures are used which are not halogenated and can be liquefied under pressure. Preferably the propellant comprises exclusively or chiefly lower aliphatic hydrocarbons, such as propane, n-butane or isobutane, or mixtures thereof. Optionally a minor quantity of another harmless gas such as dimethyl ether may be included.

The aerosol cans are filled by packing the prepared paint composition in them or by combining the partial mixtures discussed above in them. Then the aerosol can is sealed by fitting the spray valve. Then the propellant is packed under high pressure. The propellant thus liquefied fully mixes with the paint, so that a continuous phase is obtained, the liquid propellant operating as a co-solvent or diluent. By the appropriate choice of the ratio of propellant and paint composition an aerosol spray paint is obtained which is readily and totally sprayable, "readily" because the viscosity is sufficiently low, and "totally" because sufficient propellant is present to permit the can to be emptied completely. Depending on the specific composition of the paint composition and on the nature of the propellant, the ready aerosol spray paint comprises 25-40% and preferably 30-35% by weight of propellant, and 75-60% and preferably 70-65% by weight of paint composition. Generally, by pressure packing the propellant, the pressure in the aerosol can is increased to a value of 360-400 kPa and preferably to a value of 380-400 kPa at 20°C.

In the area of aerosol cans the end product thus obtained is considered an environmentally friendly product having a low flammability. Further, the product has a large yield owing to the high solids content. The paint is readily and totally sprayable while forming a paint film of excellent quality, which has a drying time of 3 to 5 hours, which in practice is quite acceptable for a paint of this type.

The invention is illustrated in and by the following examples.

Examples

A number of high gloss aerosol spray paints were prepared having compositions as specified in the table below The values specified in the table are weight percentages of the total aerosol spray paint, including the propellant (A + B + C = 100%)

**T A B L E**

| Component \ Colour | White | Black | Ivory | Blue | Green | Grey | Red | Pink | Colourless | |
|---|---|---|---|---|---|---|---|---|---|---|
| Uralac XP 104 AD (1) | 11.5 | 11.5 | 11.3 | 11.3 | 11.3 | 11.4 | 11.3 | 11.3 | 16.8 | mixing and milling (dispersing) A |
| Nuodex CA 5 (2) | 1.9 | 1.9 | 1.9 | 1.9 | 1.9 | 1.9 | 1.9 | 1.9 | 2.6 | |
| Bentone SD-1 (3) | 0.3 | 0.3 | 0.3 | 0.3 | 0.3 | 0.3 | 0.3 | 0.3 | 0.27 | |
| Shellsol T (4) | 5.5 | 5.4 | 5.6 | 5.6 | 5.7 | 5.6 | 5.7 | 5.6 | 5.1 | |
| HC Geel 579 (yellow) (5) | - | - | 0.2 | - | 2.7 | - | - | - | - | |
| Oxydgeel 3920 (oxide yellow)(5) | - | - | 1.1 | 0.03 | 2.2 | 0.06 | - | - | - | |
| Oxydrood 180 (oxide red) (5) | - | - | 0.01 | 0.13 | - | - | - | - | - | |
| Titaanwit (titanium white) (5) | 24.9 | - | 21.7 | 16.9 | 2.1 | 22.9 | 0.8 | 10.7 | - | |
| Spec. zwart 100(black)(5) | - | 1.3 | 0.01 | - | - | 0.3 | - | - | - | |
| Phalobblauw (blue) (5) L 6975 F | - | - | - | 1.3 | 0.7 | - | 0.01 | - | - | |
| HC Rood 477 (red) (5) | - | - | - | - | - | - | - | 0.8 | - | |
| HC Rood 631 (red) (5) | - | - | - | - | - | - | - | 0.5 | - | |
| HC Rood 657 (red) (5) | - | - | - | - | - | - | 4.4 | - | - | |
| Blanc Fixe micro (6) | 3.2 | 26.9 | 5.2 | 9.8 | 20.4 | 4.8 | 23.0 | 16.2 | 14.3 | |
| Uralac XP 104 (1) | 17.1 | 17.1 | 17.0 | 17.0 | 17.0 | 17.0 | 16.9 | 16.9 | 25.2 | mixing B |
| Nuodex LS (2) | 0.5 | 0.5 | 0.5 | 0.5 | 0.5 | 0.5 | 0.5 | 0.5 | 0.7 | |
| Shellsol T (4) | 2.7 | 2.7 | 2.75 | 2.84 | 2.8 | 2.84 | 2.79 | 2.87 | 2.5 | |
| Rhodorsil oil (7) | 0.2 | 0.2 | 0.2 | 0.2 | 0.2 | 0.2 | 0.2 | 0.2 | 0.2 | |
| Exkin 2 (8) | 0.1 | 0.1 | 0.1 | 0.1 | 0.1 | 0.1 | 0.1 | 0.1 | 0.2 | |
| Silicon Oil TRS (9) | 0.1 | 0.1 | 0.1 | 0.1 | 0.1 | 0.1 | 0.1 | 0.13 | 0.13 | |
| Propene/butene (45/55) 400 kPa | 32.0 | 32.0 | 32.0 | 32.0 | 32.0 | 32.0 | 32.0 | 32.0 | 32.0 | propellant C |

EP 0 375 010 B1

1) Uralac XP 104 AD (DSM Resins BV, Zwolle):
an alkyd resin having an isophthalic acid content of about 13%, a fatty acid content (a mixture of fatty acids) of about 73% and an acid number not exceeding 12.
2) Nuodex CA 5/Nuodex LS (Servo, Delden):
a calcium drier and a cobalt-potassium drier having a solids content of 59% and 45%, respectively
3) Bentone SD-1 (NL Chemicals, Rotterdam):
a rheological additive on the basis of organically modified silicate platelets
4) Shellsol T (Shell Chemie):
an aliphatic solvent, free of aromatics and having a boiling range of 182-212°C at 101.3 kPa
5) pigments (Bayer, Degussa, BASF, and Holland Colours)
6) Blanc Fixe micro (Sachtleben Chemie, Duisburg, FRG):
a filler consisting of precipitated barium sulfate CI 77120
7) Rhodorsil oil 45 (Rhône-Poulenc):
dimethyl polysiloxane oil
8) Exkin 2 (Servo, Delden):
methylethylketoxime (anti-skinning additive)
9) Silicon oil TRS (Wacker Chemie, München, FRG):
dimethyl polysiloxanes in xylene (anti-foaming agent)
The partial mixtures A and B separately prepared by mixing and milling or by mixing alone were combined and homogenized to produce a paint composition, which was then dosed in an aerosol can. The aerosol can was then sealed and fitted with a spray valve. Then the paint composition was machine-pressurized by means of the propellant dosed via the valve.

The aerosol spray paints thus obtained are environmentally friendly products having a low flammability. They are readily sprayable, have a high paint yield and form a fast-drying high-gloss paint film of excellent quality.

## Claims

1. An aerosol paint comprising a propellant and a paint composition containing a film-forming resin, high-boiling aliphatic hydrocarbons and further additives, characterized in that the paint consists as to 25-40% by weight of propellant and as to 75-60% by weight of paint composition, the propellant being a non-halogenated gas or gas mixture in liquified form which acts as a co-solvent or diluent for the film-forming resin, and the paint composition having a solids content of at least 85% by weight and comprising a maximum of 15% by weight of high-boiling aliphatic hydrocarbons.

2. An aerosol paint according to claim 1, characterized in that the paint consists as to 30-35% of propellant and as to 70-65% of paint composition.

3. An aerosol paint according to claim 1 or 2, characterized in that the propellant essentially consists of one or more lower aliphatic hydrocarbons.

4. An aerosol paint according to claims 1-3, characterized in that the concentration of the film-forming resin in the paint composition is 35-70% by weight.

5. An aerosol paint according to claims 1-4, characterized in that the film-forming resin is an alkyd resin having a fatty acid content of at least 55%.

6. An aerosol paint according to claims 1-5, characterized in that the paint composition contains a rheological additive, in particular an organic silicate, in a concentration of 0.12% by weight.

7. An aerosol paint according to claims 1-6, characterized in that the paint composition contains a levelling or anti-cratering agent, in particular a siloxane oil, in a concentration of 0.01-1% by weight.

8. An aerosol paint according to claims 1-7, characterized in that the paint composition contains an anti-foaming agent, in particular a surface-active agent selected from the group of silicon compounds, in a concentration of 0.01-1% by weight.

## Patentansprüche

1. Aerosolfarbe, aufweisend ein Treibmittel und eine Farbzusammensetzung, die ein filmbildendes Harz, hochsiedende aliphatische Kohlenwasserstoffe und weitere Additive enthält, dadurch gekennzeichnet, daß die Farbe 25 - 40 Gew.-% an Treibmittel und 75 bis 60 Gew.-% an Farbzusammensetzung enthält, wobei das Treibmittel ein nicht halogeniertes Gas oder Gasmischung in flüssiger oder fließfähiger Form ist, welches als Mit-Lösungsmittel oder Verdünnungsmittel für das filmbildende Harz dient und die Farbzusammensetzung einen Feststoffgehalt von wenigstens 85 Gew.-% hat und maximal von 15 Gew.-% an hochsiedenden aliphatischen Kohlenwasserstoffen aufweist.

2. Aerosolfarbe nach Anspruch 1, dadurch gekennzeichnet, daß die Farbe 30 bis 35% an Treibmittel und 70 - 65% an Farbzusammensetzung enthält.

3. Aerosolfarbe nach Anspruch 1 oder 2, dadurch gekennzeichnet, daß das Treibmittel im wesentlichen aus einem oder mehreren niederen aliphatischen Kohlenwasserstoffen besteht.

4. Aerosolfarbe nach den Ansprüchen 1 bis 3, dadurch gekennzeichnet, daß die Konzentration des filmbildenden Harzes in der Farbzusammensetzung 35 - 70 Gew.-% beträgt.

5. Aerosolfarbe nach den Ansprüchen 1 bis 4, dadurch gekennzeichnet, daß das filmbildende Harz ein Alkydharz mit einem Fettsäuregehalt von wenigstens 55% ist.

6. Aerosolfarbe nach den Ansprüchen 1 bis 5, dadurch gekennzeichnet, daß die Farbzusammensetzung ein rheologisches Additiv, insbesondere ein organisches Silikat in einer Konzentration von 0,1 bis 2 Gew.-% enthält.

7. Aerosolfarbe nach den Ansprüchen 1 bis 6, dadurch gekennzeichnet, daß die Farbzusammensetzung ein Nivellier- oder Antikratermittel, insbesondere ein Siloxanöl in einer Konzentration von 0,01 - 1 Gew.-% enthält.

8. Aerosolfarbe nach den Ansprüchen 1 bis 7, dadurch gekennzeichnet, daß die Farbzusammensetzung ein Antischaummittel, insbesondere ein oberflächenaktives Mittel enthält, welches aus der Gruppe der Siliziumzusammensetzungen in einer Konzentration von 0,01 - 1 Gew.-% ausgewählt ist.


**Revendications**

1. Peinture aérosol comprenant un propulseur et une composition de peinture contenant une résine filmogène, des hydrocarbures aliphatiques à point d'ébullition élevé et d'autres additifs, caractérisée par le fait que la peinture consiste, pour 25 - 40% en poids, en propulseur, et pour 75 - 60% en poids, en composition de peinture, le propulseur étant un gaz non-halogéné ou mélange de gaz non-halogénés sous une forme liquéfiée qui agit comme co-solvant ou diluant pour la résine filmogène, et la composition de peinture ayant une teneur en matières solides d'au moins 85% en poids et comprenant un maximum de 15% en poids d'hydrocarbures aliphatiques à point d'ébullition élevé.

2. Peinture aérosol selon la revendication 1, caractérisée par le fait que la peinture consiste, pour 30 - 35%, en propulseur, et pour 70 - 65%, en composition de peinture.

3. Peinture aérosol selon l'une des revendications 1 et 2, caractérisée par le fait que le propulseur consiste essentiellement en un ou plusieurs hydrocarbures aliphatiques inférieurs.

4. Peinture aérosol selon l'une quelconque des revendications 1 à 3, caractérisée par le fait que la concentration de la résine filmogène dans la composition de peinture est de 35 - 70% en poids.

5. Peinture aérosol selon l'une quelconque des revendications 1 à 4, caractérisée par le fait que la résine filmogène est une résine alkyde ayant une teneur en acides gras d'au moins 55%.

6. Peinture aérosol selon l'une quelconque des revendications 1 à 5, caractérisée par le fait que la composition de peinture contient un additif rhéologique, en particulier un silicate organique, dans une concentration de 0,1 - 2% en poids.

7. Peinture aérosol selon l'une quelconque des revendications 1 à 6, caractérisée par le fait que la composition de peinture contient un agent d'unisson ou anti-cratères, en particulier une huile de siloxane, dans une concentration de 0,01 - 1% en poids.

8. Peinture aérosol selon l'une quelconque des revendications 1 à 7, caractérisée par le fait que la composition de peinture contient un agent anti-mousse, en particulier un agent tensio-actif choisi dans le groupe des composés du silicium, dans une concentration de 0,01 - 1% en poids.